# EUROPEAN PATENT SPECIFICATION

(11) **EP 2 839 180 B1**
(45) Date of publication and mention of the grant of the patent: **29.11.2017**
(21) Application number: 12716001.8
(22) Date of filing: 20.04.2012
(51) Int. Cl.: F16F 9/46

(54) **VALVE ARRANGEMENT**
VENTILANORDNUNG
AGENCEMENT DE SOUPAPE

(43) Date of publication of application: 25.02.2015
(73) Proprietor: Öhlins Racing AB, 194 27 Upplands Väsby (SE)
(72) Inventor: EWERS, Benny, 574 36 Vetlanda (SE)
(74) Representative: Awapatent AB
(86) International application number: PCT/EP2012/057293
(87) International publication number: WO 2013/156082

(56) References cited:
- WO-A1-2008/006659
- US-A- 4 452 436
- US-A- 5 655 633
- US-A- 6 079 526
- US-A1- 2004 188 200

## Description

### Technical field of the invention

The present invention relates to a valve arrangement for controlling a main flow of damping medium in a shock absorber from a first chamber to a second chamber during a first stroke and from the second chamber to the first chamber during a second stroke.

### Technical background

Generally, within the technical field of shock absorbers that include pilot valves, a pressure regulator, i.e. a valve arrangement, is used to control a flow of damping medium between a compression chamber and a rebound chamber during a reciprocal motion of a piston in a damping medium filled chamber of the shock absorber. The piston, via a piston rod, is connected either to a wheel or a chassis of, whereas the chamber is connected to one of the wheel or chassis that the piston is not connected to. During a compression stroke the piston moves in a direction towards the compression chamber and thereby pressurizes the damping medium in the compression chamber. During a rebound stroke, the piston moves towards the rebound chamber, i.e. in the opposite direction, and thereby pressurizes the damping medium in the rebound chamber. In accordance with the function of the shock absorber, the pressurized damping medium needs to be transferred from the pressurized chamber to the other chamber, i.e. from the compression chamber to the rebound chamber or vice versa. The flow of damping medium needs to be controlled to obtain a damping effect of the piston and thus the shock absorber, i.e. to damp relative motion between the wheel and chassis.

The control of the pressure in the flow of damping medium in the shock absorber depends on the pressure created by the pilot valve due to the speed of movement of the piston. Pressure regulators in shock absorbers are usually provided with a movable adjustment part, such as a washer or a cone that acts against a seat part. The pressure control is achieved by equilibrium of forces on the movable adjustment part between a regulator force and supplemental opposing forces, such as one or more of a spring force, flow force, valve damping force, friction force or pilot pressure force. When the piston of the shock absorber moves at a speed such that the regulator forces become greater than the opposing forces, the movable adjustment part is forced to open. Thus, the movable adjustment part is forced to open at a stroke defined as a function of the flow produced by the pressure acting on the regulating area of the pressure regulator.

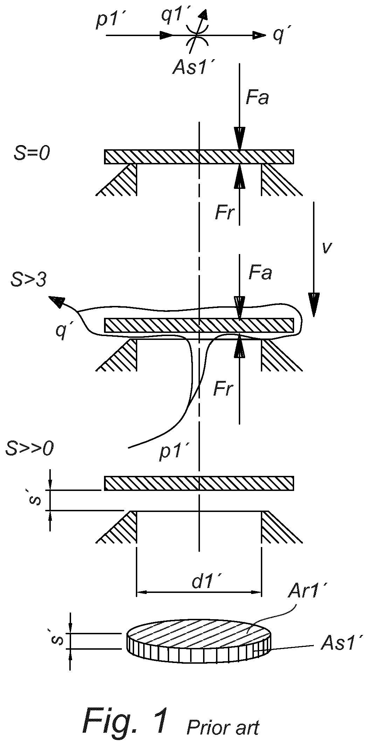

In a simple form of a pressure regulator, see Fig. 1, a valve member in the form of a plane washer, cone, or the like rests against a seat. The pressure regulator has a regulating area dependent only on one diameter d1', defined as the area subjected to a regulator pressure due to flow of damping medium. Thus, the pressure regulator includes a valve member which, at various degrees, opens and closes an opening of a channel which fluidly interconnects two volumes, i.e. the compression and rebound chamber volumes, and an actuator which resiliently exerts an actuating force on the valve member. The actuator may itself be a resiliently force exerting element or may constitute a passive element upon which the resilient force exerting element exerts the resilient force. The regulator force can be defined as the regulator pressure p1 times the regulator area. The flow moves past the washer and is throttled by curtain areas As1', defined by the stroke s' and the diameter d1'. This variant of pressure regulator thus opens at a regulator force value and is kept open as long as the regulator force is at or above this regulator force value or increases its stroke s when Fr is bigger than Fa but is standing still when Fa is biasing Fr, that is Fa=Fr. When Fr is lower than Fa the regulator is closing, reducing its stroke s. In closed position Fr can be lower than Fa without any change of position when s=0. Thus, the pressure regulator abruptly opens at a predetermined pressure difference across the washer, determined by the regulator force Fr and the opposing forces, i.e. the actuating forces, which can be a total opposing force Fa, created by either or all of the spring forces Fs, pilot forces Fp, and other flow and friction forces Fq.

However, during dynamical events during the operation of the shock absorber, the regulator force and the total opposing force may reciprocally interact in an oscillating manner which, in turn, would affect the valve member and the thereupon acting actuator. This may cause unwanted oscillation or self-oscillation of the parts of the shock absorber which, in turn, may generate unwanted noise and/or will cause bad comfort in the vehicle. In addition to this, an inherent property of resilient force exerting element is that they may oscillate or self-oscillate which would contribute to the unwanted noise and/or bad comfort. Thus, one problem with such pressure regulators is that such pressure regulators may generate unwanted noise in the vehicle.

US 6079526 discloses a damping force control type hydraulic shock absorber is provided having a broad damping force control range and is capable of obtaining appropriate damping force over the entire piston speed range from a low speed region to a high speed region.

### Summary of the invention

An object with the present invention is to provide an improved valve arrangement for controlling a main flow of damping medium in a shock absorber from a first chamber to a second chamber during a first stroke and from the second chamber to the first chamber during a second stroke.

Another object with the present invention is to provide an improved valve arrangement having low leakage and/or delays.

These and other objects are achieved by providing a valve arrangement having the features defined in the independent claim. Preferred embodiments are defined in the dependent claims.

According to a first aspect of the present invention, there is provided a valve arrangement for controlling a main flow of damping medium in a shock absorber from a first chamber, i.e. a first main chamber, to a second chamber, i.e. a second main chamber, during a first stroke and from the second chamber to the first chamber during a second stroke. The valve arrangement comprises a first actuator having a first actuator chamber communicating with said first chamber and said second chamber, said first actuator, during said first stroke, being arranged to actuate on said main flow of damping medium in response to a first actuating pressure in the first actuator chamber; a pilot valve being arranged to control the first actuating pressure, the pilot valve having a pilot chamber being in fluid communication with the first actuator chamber. The valve arrangement further comprises a first flow passage for restricting a flow from the first actuator chamber to the pilot chamber and a first valve member arranged between two oppositely arranged valve seats forming a first valve, i.e. a first sub-valve, and a second valve, i.e. a second sub-valve, such that the valves (i.e. the first and second valves) may only be open one at the time.

In other words, at any time, the first and second valves are either both closed, or only one of the valves is open. Put differently, the first and second valves are not open simultaneously at any time. The first valve member is arranged to co-operate with the two oppositely arranged valve seats such that:
- the first and second valves are closed in a non-pressurized state, i.e. when no or essentially no fluid flows between the first and second chambers, and
- during the first stroke when the first chamber is pressurized, the second valve is closed and the first valve is open (due to a pressure difference) to allow or open a second flow passagebetween the first actuator chamber and the pilot chamberin parallel with the first flow passage, and
- during the second stroke when the second chamber is pressurized, the first valve is closed and the second valve is open to allow or open a flow passage from the second chamber to the first actuator chamber. A flow is thereby forced through the restricted first flow passage such that the flow from the second chamber via the first actuator chamber to the pilot chamber is restricted.

Put differently, the first valve may be open during the second stroke to bypass the first flow passage.

It is understood that the during the first stroke, the flow between the first actuator chamber and the pilot chamber may either flow from the first actuator chamber to the pilot chamber or from the pilot chamber to the first actuator chamber depending on the pilot controlled pressure difference.

It is understood that said pilot valve is arranged to control at least the first actuating pressure, i.e. the pilot valve is able to control at least one actuator. In that case, it is further understood that the pilot chamber of the pilot valve is in fluid communication with both actuator chambers. Moreover, the pilot chamber also communicates with the first chamber and second chamber, i.e. during the first stroke the pilot chamber is in fluid communication with the second chamber and during the second stroke the pilot chamber is in fluid communication with the first chamber

As envisage by the skilled person, the shock absorber is provided with a piston which divides the shock absorber chamber into a first chamber and a second chamber. Furthermore, the piston reciprocally moves within the shock absorber chamber. During a first stroke, the piston moves towards the first chamber and pressurizes the damping medium therein which thereafter flows to the second chamber via the valve arrangement. Thus, the piston moves in one direction, whereas the damping medium flows in the opposite direction.

Thus, the present invention is based on the insight that it is desirable to have different flow restrictions on the flow between the actuator chambers and the pilot chamber depending on for example the stroke, and that such different flow restrictions may be achieved by using a a first flow passage and a valve member arranged between two oppositely arranged valve seats forming the first valve and second valve. The present invention is furthermore based on the insight that low leakage and consequently low delay may be achieved by arranging the valve member and the valve seats such that the first and second valves may only be opened one at the time, i.e. such that no or essentially no flow passes both valves simultaneously. Thereby, initial undesired leakage to or from the actuator chamber may be prevented such that the valve arrangement more rapidly adapts to the desired damping force.

Since it is possible to separate the flow restriction of the flow between the actuator chamber and the pilot chamber depending on the stroke, it is thereby possible to adapt the flow restriction to different needs during the first stroke and the second stroke. Thus, if for example an annular actuator, or another element or actuating member of the actuator, or any other part or portion of the actuator, such as a valve member or the like, is subjected to an oscillating force, or any force which could generate an oscillating or any type of movement which could have a detrimental impact on the damping characteristic, and this oscillating force and/or any other type of movement would generate an oscillating of the damping medium in the actuator chamber, then this movement could be attenuated by adapting the flow restriction between the actuator chamber and the pilot chamber during, for example, the first stroke. Thereby, the flow path between the actuator chamber and the pilot chamber is provided with a first flow restriction area suitable for effectively attenuating any unwanted movement of damping medium in the actuator chamber. However, during the second stroke, the damping medium enters the actuator chamber, for example, from the second chamber and continues to the pilot chamber. This flow from the actuator chamber to the pilot chamber during the second stroke requires a second flow restriction area, which may be smaller than the first flow restriction area. Thus, one advantage of the present invention is thus that it provides at least a first and a second flow path between the actuator chamber and the pilot chamber which are arranged with at least a first and a second flow restriction during different strokes.

As is understood by the skilled person, the degree of restriction which is required to attenuate any unwanted movement of damping medium in the actuator chamber is determined by the actuator volume, i.e. the volume of damping medium which is accommodated by the actuator chamber.

Furthermore, it should be noted that by the terms "first stroke" and "second stroke" as used herein is intended to refer to either one a compression stroke and rebound stroke. Thus, the first stroke could be one of the compression stroke and rebound stroke. Similarly, the second stroke could be one of the compression stroke or rebound stroke. However, as envisage by the skilled person in the art, if the first stroke is the compression stroke then the second stroke is the rebound stroke and vice versa, i.e. the first stroke is a stroke in first direction whereas the second stroke is a stroke in a second direction opposite to the first direction.

According to an embodiment of the invention, the flow restriction area of the second flow passage is substantially larger than that of the first flow passage in order to obtain an essentially unrestricted flow between the pilot chamber and the first actuator chamber during the first stroke. Put differently, the first valve member may co-operate with the first valve seat to form a check valve which allows a flow between the pilot chamber and the first actuator chamber during the first stroke, but blocks a flow in the opposite direction.

According to another embodiment of the invention, the flow passage from the second chamber to the first actuator chamber being open during the second stroke has a large flow restriction area in order to obtain an essentially unrestricted flow from the second chamber to the first actuator chamber. Put differently, the first valve member may co-operate with the second valve seat to form a check valve which allows a flow from the second chamber to the first actuator chamber during the second stroke, but blocks a flow in the opposite direction.

According to another embodiment of the invention, the first valve member is further arranged such that the flow restriction area of the second flow passage varies with the pressure difference between the pilot chamber and the first actuator chamber. In other words, the second flow passage has a pressure regulated flow restriction area.

According to yet another embodiment of the invention, the first valve member is flexible. The first valve member may furthermore be disk shaped or may be a shim or a plate-shaped element.

According to yet another embodiment of the invention, the first and second valve seats are annular. The first valve seat may be of a smaller diameter than the second valve seat.

According to yet another embodiment of the invention, the first valve member is in contact or in abutment with both the first and second valve seats in a non-pressurized state. In other words, the first valve member rests against both the first and second valve seats in a non-pressurized state. This is advantageous because essentially no leakage is present to or from the first actuator chamber via the first and second valves when the valve arrangement is in a non-pressurized state or when switching direction, i.e. from the first stroke to the second stroke or vice versa. Thereby, the desired pressure in the actuator chamber, and thereby the desired damping force, is achieved with short delay even during transient operation.

According to yet another embodiment of the invention, the first flow passage is at least one groove, slot or slit in the first valve seat. The first flow passage may alternatively be a through hole with a fixed restriction area in a wall portion between the first actuator chamber and the pilot chamber or in a wall portion between the first actuator chamber and a flow passage in fluid communication with the pilot chamber.

According to yet another embodiment of the invention, the valve arrangement further comprises a compensation chamber arranged oppositely to the first valve seat for allowing a deflection of the first valve member in order to extend the first actuator chamber. In other words, a compensation chamber is arranged on the opposite side of the first valve member relative to the first valve seat. When the pressure increases in the first actuator chamber, the first valve member may therefore bend or deflect away from the first valve seat and into the compensation chamber, thereby temporarily increasing the effective size or volume of the first actuator chamber. The depth of the compensation chamber may be chosen to limit the maximum allowable bending or deflection of the first valve member in order to limit the size or volume increase of the first actutator chamber. This is advantageous during a rapid increase of the pressure in the actuator chamber because undesired pressure spikes may be avoided.

According to yet another embodiment of the invention, the second actuator comprises an annular actuator being arranged to actuate on the main flow of damping medium in response to the second actuating pressure.

In yet another embodiment of the present invention, the first actuator comprises an annular or ring-shaped actuator body being arranged to actuate on the main flow of damping medium in response to the first actuating pressure. The ring-shaped actuator body may be guided on an inner periphery thereof by for example the actuator housing. The ring-shaped actuator body may be used together with a plate spring or a shim stack adapted to exert an opposing spring force a main valve member via the ring-shaped actuator body. The plate spring or shim stack may be arranged to provide a sealing function around an outer periphery of the actuator body. Thereby, a relatively large play may be used around said outer perihpery. In such a manner, a relatively low friction and stick slip may be achieved. The plate spring may allow the ring-shaped actuator to always be in contact with the main valve member.

In yet another embodiment of the present invention, the valve arrangement further comprises a third flow passage for restricting a flow from the second actuator chamber to the pilot chamber and a second valve member arranged between two oppositely arranged valve seats forming a third valve and a fourth valve that may only be open one at the time.

In yet another embodiment of the present invention, the second valve member may be arranged to co-operate with the two oppositely arranged valve seats such that:
- the third and fourth valves are closed in a non-pressurized state, i.e. when no or essentially no fluid flows between the first and second chambers, and
- during the second stroke when the second chamber is pressurized, the fourth valve is closed and the third valve is open (due to a pressure difference) to allow or open a fourth flow passage between the second actuator chamber and the pilot chamber, in parallel with the third flow passage, and
- during the first stroke when the first chamber is pressurized, the third valve is closed and the fourth valve is open to allow or open a flow passage from the first chamber to the second actuator chamber. A flow is thereby forced through the restricted third flow passage such that the flow from the first chamber via the second actuator chamber is restricted.

Put differently, the third valve may be open during the first stroke to bypass the third flow passage.

It is understood that during the second stroke, the flow between the second actuator chamber and the pilot chamber may either flow from the second actuator chamber to the pilot chamber or from the pilot chamber to the second actuator chamber depending on the pilot controlled pressure difference.

According to an embodiment of the invention, the flow restriction area of the fourth flow passage is substantially larger than that of the third flow passage in order to obtain an essentially unrestricted flow between the pilot chamber and the second actuator chamber during the second stroke. Put differently, the second valve member may co-operate with the third valve seat to form a check valve which allows a flow between the pilot chamber and the second actuator chamber during the second stroke, but blocks a flow in the opposite direction.

According to another embodiment of the invention, the flow passage from the first chamber to the second actuator chamber being open during the first stroke has a large flow restriction area in order to obtain an essentially unrestricted flow from the first chamber to the second actuator chamber. Put differently, the second valve member may co-operate with the fourth valve seat to form a check valve which allows a flow from the first chamber to the second actuator chamber during the first stroke, but blocks a flow in the opposite direction.

According to another embodiment of the invention, the second valve member is further arranged such that the flow restriction area of the fourth flow passage varies with the pressure difference between the pilot chamber and the second actuator chamber. In other words, the fourth flow passage has a pressure regulated flow restriction area.

According to yet another embodiment of the invention, the second valve member is flexible. The second valve member may furthermore be disk shaped or may be a shim or a plate-shaped element.

According to yet another embodiment of the invention, the third and fourth valve seats are annular. The third valve seat may be of a smaller diameter than the fourth valve seat.

According to yet another embodiment of the invention, the second valve member is in contact or in abutment with both the third and fourth valve seats in a non-pressurized state. In other words, the second valve member rests against both the third and fourth valve seats in a non-pressurized state. This is advantageous because essentially no leakage is present to or from the second actuator chamber via the third and fourth valves when the valve arrangement is in a non-pressurized state or when switching direction, i.e. from the first stroke to the second stroke or vice versa. Thereby, the desired pressure in the actuator chamber, and thereby the desired damping force, is achieved with short delay even during transient operation.

According to yet another embodiment of the invention, the third flow passage is at least one groove, slot or slit in the first valve seat. The third flow passage may alternatively be a through hole with a fixed restriction area in a wall portion between the second actuator chamber and the pilot chamber or in a wall portion between the second actuator chamber and a flow passage in fluid communication with the pilot chamber.

According to yet another embodiment of the invention, the valve arrangement further comprises a compensation chamber arranged oppositely to the third valve seat for allowing a deflection of the second valve member in order to extend the second actuator chamber. In other words, a compensation chamber is arranged on the opposite side of the second valve member relative to the third valve seat. When the pressure increases in the second actuator chamber, the second valve member may therefore bend or deflect away from the third valve seat and into the compensation chamber, thereby temporarily increasing the effective size or volume of the second actuator chamber. The depth of the compensation chamber may be chosen to limit the maximum allowable bending or deflection of the second valve member in order to limit the size or volume increase of the first actutator chamber. This is advantageous during a rapid increase of the pressure in the actuator chamber because undesired pressure spikes may be avoided.

In yet another embodiment of the present invention, the second actuator comprises an annular or ring-shaped actuator body being arranged to actuate on the main flow of damping medium in response to the second actuating pressure. The ring-shaped actuator body may be guided on an inner periphery thereof by for example the actuator housing. The ring-shaped actuator body may be used together with a plate spring or a shim stack adapted to exert an opposing spring force a main valve member via the ring-shaped actuator body. The plate spring or shim stack may be arranged to provide a sealing function around an outer periphery of the actuator body. Thereby, a relatively large play may be used around said outer perihpery. In such a manner, a relatively low friction and stick slip may be achieved. The plate spring may allow the ring-shaped actuator to always be in contact with the main valve member.

In a further embodiment of the present invention, the first stroke is one of a compression stroke and a rebound stroke of the shock absorber, and the second stroke is the other of the compression stroke and the rebound stroke.

In a further embodiment of the present invention, said first and/or second actuator further comprises springs which are arranged with different preload and spring rates in order to provide a spring force action such that the valve member is controllable in a plurality of ways to obtain a plurality of different tilting patterns which will increase the freedom of selectable valve characteristics at low or zero pilot pressures.

In a further embodiment of the present invention, the valve arrangement is provided with a piston rod including a solenoid, a pilot valve with controllable pilotpressure pp and a piston dividing a shock absorber into a first and asecond chamber. The valve arrangement further comprises at least one disk or a shims arrangment which are actuated on by at least one actuator. Alternatively, the valve arrangement may be provided with two actuators arrnaged on either side of the piston.

### Brief description of the drawings

Further details and aspect of the present invention will become apparent from the following detailed description with reference to accompanying drawings, in which:
Fig. 1 is a schematic illustration of a known variant of simple pressure regulator,
fig. 2 is a cross-sectional schematic view of a dual-action and pilot controlled shock absorber valve according to an embodiment of the present invention,
fig. 3a-f are cross-sectional schematic views of an alternative embodiment of the present invention,
fig. 3g is a cross-sectional schematic view of another alternative embodiment of the present invention, and
fig. 4a-b are schematic diagrams of a dual-action and pilot controlled shock absorber valve according to an embodiment of the present invention.

### Detailed description of embodiments

The present invention will now further be described in connection with the accompanying drawings. It should be noted that even though a valve arrangement with an electronically controlled pilot valve will be described and illustrated, the present invention is also applicable to valve arrangements with pilot valves that are not electronically controlled. Furthermore, it should also be noted that even though a dual-action valve arrangement will be described and illustrated, the present invention is also applicable to valve arrangements arranged to only act with one of the compression stroke and rebound stroke.

An electronically controlled pilot valve is controlled by a control device having processing capabilities via a control signal from the control device. The control device takes into account vehicle parameters, such as the speed of the vehicle and angle of the steering element. These parameters affect the control signal which, in turn affects the parameter of the pilot valve and the damping characteristics of the shock absorber.

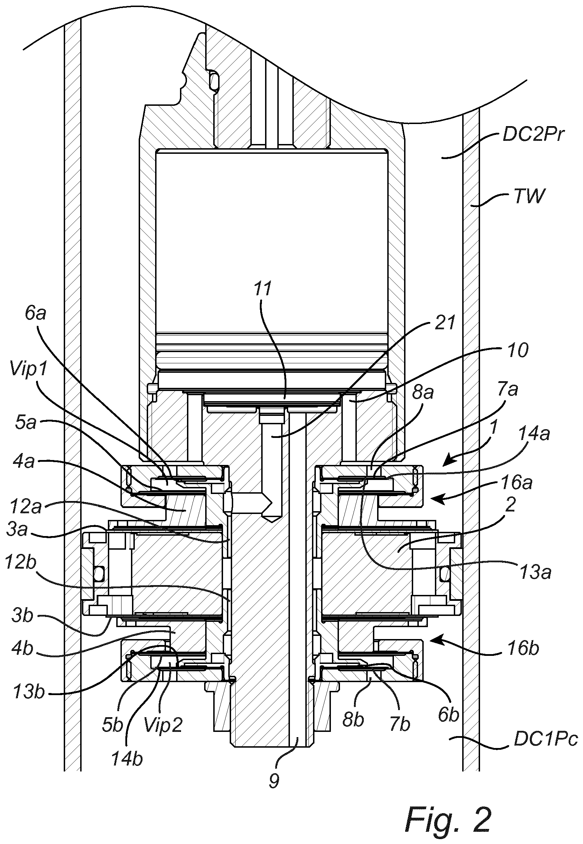

With reference to Fig 2, a dual-action valve arrangement in a pilot controlled shock absorber is shown. A main piston 2 partitions the damping cylinder of the shock absorber into a second chamber DC1 Pc and a first chamber DC2 Pr. In this case, the second chamber DC1 Pc is the compression chamber and the first chamber DC2 Pr is the rebound chamber. The main piston 2 is secured to a piston rod. The movement of the main piston 2 in the tube wall TW of the damping cylinder creates a flow of damping medium between the respective damping chambers via a shock absorber valve, i.e. a valve arrangement 1, which is integrated with the piston 2. In the embodiment shown in Fig. 2, the shock absorber valve is arranged in the main piston. However, it is understood that the shock absorber valve may be arranged in a separate space interconnected with the damping chambers DC1 Pc and DC2 Pr. The hydraulic damping medium provided in the damping cylinder may be pressurized with a gas pressure to reduce the risk of cavitation in the damping medium, i.e. a high cavitation pressure.

In Fig. 2, the pressure regulator has plurality of seat parts on either side of the main piston 2, wherein the seat part is a portion of the main piston 2. On either side of the main piston 2, a first main valve member 3b and a second main valve member 3a is provided. The first main valve member 3b and the second main valve member 3a is arranged to co-operate with the plurality of seat parts in order to obtain a valve function. In other words, the main valve members 3a and 3b interacts with the seat parts to obtain a valve function.

Fig. 2 shows a valve arrangement for controlling a main flow of damping medium in a shock absorber from a first chamber DC2 Pr, in this case a rebound chamber, to a second chamber DC1 Pc, in this case a compression chamber, during a first stroke and from the second chamber to the first chamber during a second stroke. A first actuator has a first actuator chamber Vip2 which communicates with the first chamber DC2 Pr and the second chamber DC1 Pc. The first actuator, during said first stroke, is arranged to actuate on said main flow of damping medium in response to a first actuating pressure in the first actuator chamber Vip2. A pilot valve is arranged to control the first actuating pressure, wherein the pilot valve has a pilot chamber 21 which is in fluid communication with the first actuator chamber. Ring-shaped actuators 4a, 4b are used to actuate on the main flow of damping medium in each direction in response to the pressure in the actuating chambers Vip1, Vip2. The ring-shaped actuator is arranged in the actuator housing 16a, 16b. Plate springs 5a, 5b are attached to the actuator housing 16a, 16b along their outer circumference, and is adapted to exert an opposing spring force on the main valve members 3a, 3b via the ring-shaped actuators 4a, 4b. The plate springs 5a, 5b allows the ring-shaped actuator to always be in contact with the main valve member. The bottom surface of the first ring-shaped actuators 4a, 4b together with inner surfaces of the actuator housing 16a, 16b defines the actuator chambers Vip1, Vip2.

A first sub valve arrangement comprises a first flexible disk shaped valve member 7b, a first annular valve seat 13b, a second annular valve seat 14b, and a first flow passage 6b. The first valve seat has a smaller diameter than that of the second valve seat. The first valve seat is arranged above the first valve member, and the second valve seat is arranged beneath and on the opposite side of the first valve member. The first flow passage 6b is formed by a plurality of grooves, slots or slits in the first valve seat 13b distributed around its periphery. In a non-pressurized state, i.e. when essentially no fluid flows between the chambers DC1Pc and DC2Pr, the first valve member is in abutment or in contact with the first and second valve seats. Flow passages 8b are arranged to provide fluid communication between the first actuator chamber Vip2 and the second chamber DC1Pc when the first valve member is deflected or bent. An annular flow passage 12b provides fluid communication with the pilot chamber 21 and the first actuator chamber Vip2. An inner peripheral portion of the first valve member 7b is clamped between portions of the valve housing.

Moreover, a second actuator, the upper actuator, having a second actuator chamber Vip1 is shown which is able to communicate with said first chamber DC2 Pr and said second chamber DC1 Pc. Furthermore, said second actuator, during said second stroke, is arranged to actuate on said main flow of damping medium in response to a second actuating pressure in the second actuator chamber.

A second sub valve arrangement comprises a second flexible disk shaped valve member 7a, a third annular valve seat 13a, a fourth annular valve seat 14a, and a first flow passage 6a. The third valve seat 13a has a smaller diameter than that of the fourth valve seat 14a. The third valve seat is arranged beneath the second valve member, and the fourth valve seat is arranged above the second valve member. The third flow passage is formed by a plurality of grooves in the third valve seat distributed around its periphery. In a non-pressurized state, i.e. when essentially no fluid flows between the chambers DC1Pc and DC2Pr, the second valve member is in abutment with the third and fourth valve seats. Flow passages 8a are arranged to provide fluid communication between the second actuator chamber Vip1 and the first chamber DC2Pr when the second valve member is deflected. An annular flow passage 12a provides fluid communication with the pilot chamber 21 and the second actuator chamber Vip1. An inner peripheral portion of the second valve member 7a is clamped between portions of the valve housing.

The pilot valve 11 is arranged to control the pressure in the pilot chamber 21. The pilot valve is in fluid communication with the first chamber via check valves and the flow passage 10, and with the second chamber via check valves and the flow passage 9.

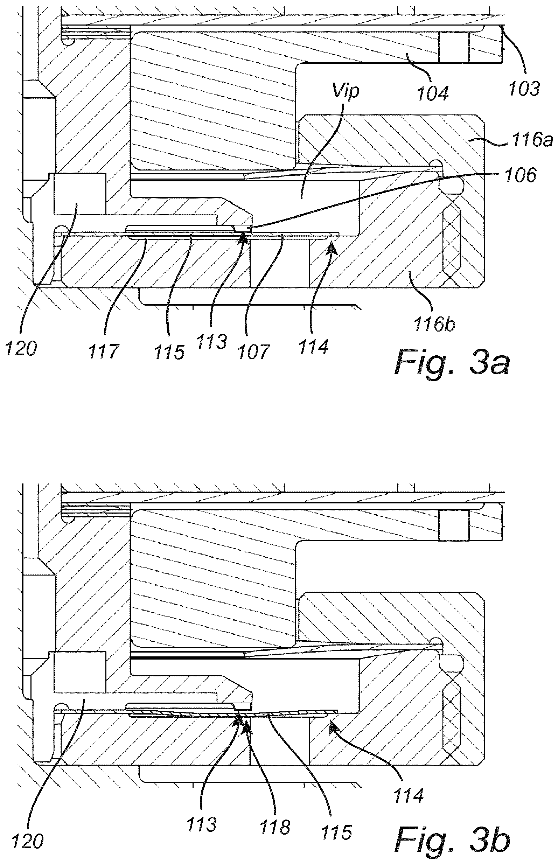

In Fig. 3a-f, cross-sectional schematic views of an embodiment of the present invention are shown.

Fig. 3a shows a view of the sub valve arrangement in a non-pressurized state, i.e. when essentially no fluid flows between the chambers DC1Pc and DC2Pr. A ring-shaped actuator 104 is arranged in the actuator housing 116a and is arranged to actuate on the main valve member 103 in response to an actuating pressure in the first actuator chamber Vip. The first valve member 115 is in abutment or in contact with the first valve seat 113 and the second valve seat 114. An outer portion 107 of the first valve member constitutes a wall portion of the first actuator chamber Vip. The first actuator chamber is consequently only in fluid communication with the flow passage 120 being connected to the pilot chamber via the first flow passage 106. The first flow passage 106 is formed by a plurality of grooves, slots or slits in the first valve seat 113 distributed around its periphery. An annular compensation chamber 117 is arranged on the opposite side of the first valve member 115 relative to the first valve seat 113.

Fig. 3b shows a view of the same sub valve arrangement as in fig. 3a during the first stroke. The first valve member 115 is in contact or in abutment with the second valve seat 114 such that the second valve is closed, but is deflected or bent due to the pressure difference between the pilot chamber and the first actuator chamber such that it is released or separated from the first valve seat 113 thereby opening the first valve. Thus, a second flow passage or a bypass flow passage is allowed or opened in parallel with the first flow passage. Since the first valve member is not in contact or in abutment with the first valve seat 113, the groove, slot or slit in the first seat is open, i.e. not enclosed by the first valve member, towards the second flow passage or a bypass flow passage. The stiffness or flexibility of the first valve member may be chosen such that the first valve member does not come into contact with the wall portion 118 of the compensation chamber 117. The restriction area of the second flow passage will depend on the pressure difference between the pilot chamber and the actuator chamber and will also depend on design parameters such as the stiffness or flexibility of the first valve member and the dimensions of the valve seats. It is understood that the second flow passage or a bypass flow passage is annular, i.e. it is formed or defined along the annular circumference of the first valve seat 113. Thereby, the flow restriction area of the second flow passage or a bypass flow passage may be substantially larger than that of the first flow passage 106, thereby effectively bypassing the first flow passage. Put differently, the first flow passage 106 together with the second flow passage or a bypass flow passage constitutes a variable flow passage which, when the first valve member 115 is released or separated from the first valve seat 113, has a flow restriction area essentially corresponding to that of the second flow passage or a bypass flow passage.

Fig. 3b also illustrates that the size or volume of the first actuator chamber Vip may temporarily increase by allowing the first valve member 115 to deflect or bend away from the first valve seat 113 into the compensation chamber 117. In other words, the first valve member 115 may be bent or deflected not only resulting from a pressure difference between the pilot chamber and the first actuator chamber, but also due to an increased pressure in the first actuator chamber Vip resulting from for example downwards movement of the first actuator 104.

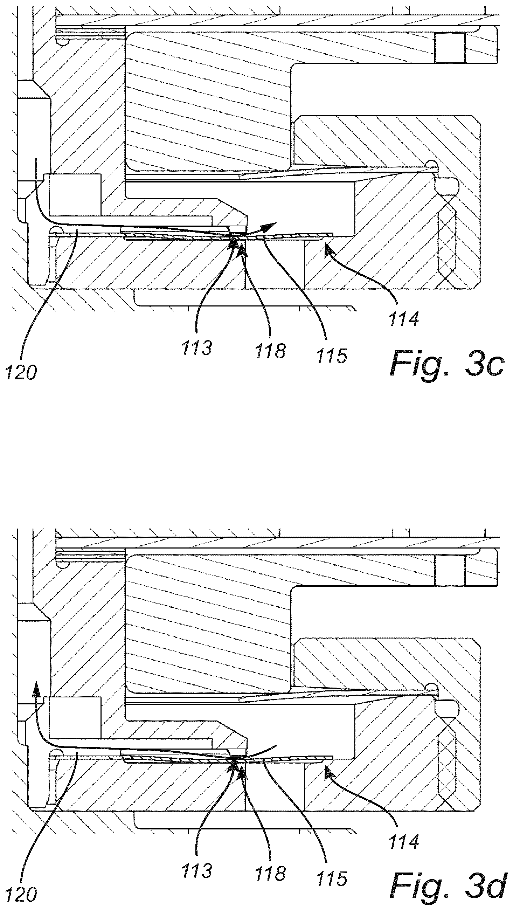

Fig. 3c shows a view of same sub valve arrangement as in fig. 3b during the second stroke when the pilot pressure is higher than the pressure in the first actuator chamber. A flow path from the pilot chamber to the first actuator chamber Vip is illustrated. The flow from the pilot chamber passes the flow passage 120 and thereafter both the first flow passage 106 and the second flow passage (i.e. the flow passage between the first valve seat 113 and the first valve member 115) in a parallel manner to arrive in the first actuator chamber Vip.

Fig. 3d shows a view of same sub valve arrangement as in fig. 3b-c during the second stroke when the pilot pressure is lower than the pressure in the first actuator chamber. A flow path from the first actuator chamber Vip to the pilot chamber to is illustrated. The flow from the first actuator chamber Vip passes both the first flow passage 106 and the second flow passage (i.e. the flow passage between the first valve seat 113 and the first valve member 115) and thereafter the flow passage 120 which is in fluid communication with the pilot chamber.

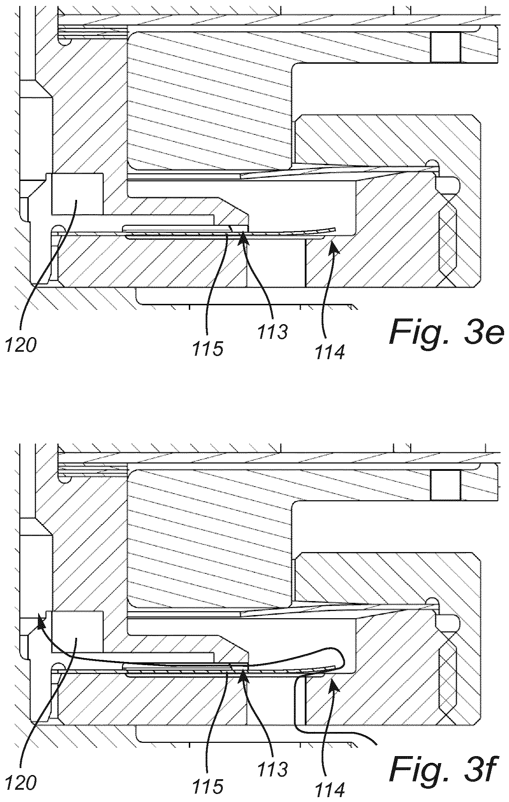

Fig. 3e shows a view of same sub valve arrangement as in fig. 3a-d during the first stroke. The first valve member 115 is in contact or in abutment with the first valve seat 113 such that the first valve is closed, but is deflected or bent upwards around its periphery due to the pressure difference between the second chamber and the first actuator chamber such that it is released or separated from the second valve seat 114 thereby opening the second valve. Thereby a flow passage is allowed or opened from the second chamber to the first actuator chamber. The restriction area of the flow passage will depend on the pressure difference between the second chamber and the first actuator chamber and will also depend on design parameters such as the stiffness or flexibility of the first valve member and the dimensions of the valve seats. The design parameters are preferably chosen such that the flow between the second chamber and the first actuator chamber is substantially unrestricted. In other words, the first valve member may co-operate with the second valve seat to form a check valve. It is furthermore understood that the flow from the first actuator chamber to the pilot chamber is restricted by the first flow passage during a second stroke.

Fig. 3f shows a view of same sub valve arrangement as in fig. 3e during the first stroke. A flow path from the second (main) chamber to the pilot chamber to is illustrated. The flow from the second chamber passes a flow passage between the second valve seat 114 and the first valve member 115, enters the first actuator chamber Vip, passes the (restricted) first flow passage 106 and thereafter passes the flow passage 120 which is in fluid communication with the pilot chamber.

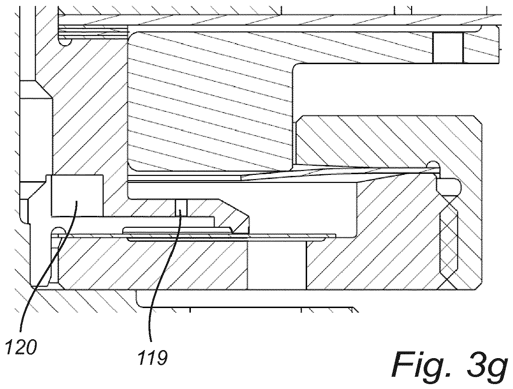

Fig. 3g shows a view of an alternative embodiment of the invention in a non-pressurized state, i.e. when essentially no fluid flows between the chambers DC1Pc and DC2Pr. This embodiment is similar to the embodiment shown in fig. 3a except for that the first flow passage 119 is a through hole in a wall portion between the flow passage 120 being connected to the pilot chamber and the first actuator chamber instead of grooves, slots or slits in the first valve seat as shown in fig. 3a. It is understood that the through hole may be arranged through other portions, e.g. through a wall portion forming the first valve seat.

It is understood that a corresponding arrangement as illustrated in fig. 3a-g and described above may be used in the other flow direction analogously with fig. 2. In another embodiment, an arrangement as illustrated in fig. 3a-3g and described above may be used in one flow direction, i.e. for restricting a flow from a first actuator chamber to the pilot chamber, and a fixed restriction arrangement may be used for in the other flow direction, i.e. for restricting a flow from a second actuator chamber to the pilot chamber.

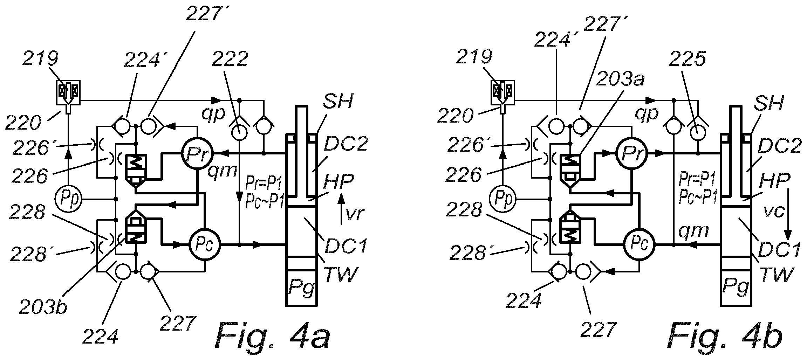

In Fig. 4a-b, schematic diagrams of a dual-action and pilot controlled shock absorber valve according to an embodiment of the present invention is shown.

In fig. 4a, the flows and valve states during a first stroke are illustrated. When the piston HP moves upwardly, the pressure Pr in the first chamber DC2 increases, and fluid flows via the open fourth check valve 227' to the second actuator chamber and thereafter to the pilot chamber 220 via the third flow passage 226 only, since the third check valve 224' is closed. The pilot valve 219 controls the pilot pressure Pp by throttling the flow qp past the pilot valve via the check valve 222 to the second chamber DC1 having pressure Pc. The pilot pressure Pp is communicated to the first actuating chamber of the first actuator via both the first flow passage 228 and the second flow passage 228' in a parallel manner since the first check valve 224 is open. Since the second check valve 227 is closed, the pilot pressure Pp controls the first actuator and thereby the main flow qm from the first chamber DC2 to the second chamber DC1.

In fig. 4b, the flows and valve states during a second stroke are illustrated. When the piston HP moves downwardly, the pressure Pc in the second chamber DC1 increases, and fluid flows via the second check valve 227 to the first actuator chamber and thereafter to the pilot chamber 220 via the first flow passage 228 only, since the first check valve 224 is closed. The pilot valve 219 controls the pilot pressure Pp by throttling the flow qp past the pilot valve via the check valve 225 to the first chamber DC2 having pressure Pr. The pilot pressure Pp is communicated to the second actuating chamber of the second actuator via both the third flow passage 226 and the fourth flow passage 226' in a parallel manner since the third check valve 224' is open. Since the fourth check valve 227' is closed, the pilot pressure Pp controls the second actuator and thereby the main flow qm from the first chamber DC2 to the second chamber DC1.

It is understood that the functionality of the fourth flow passage 226' and the check valves 224' and 227' corresponds to the second valve member 7a co-operating with the third and fourth valve seats 13a and 14a, see fig. 2, and that the functionality of the second flow passage 228' and the check valves 224 and 227 corresponds to the first valve member 7b, 115 co-operating with the first and second valve seats 13b, 113 and 14b, 114 in the embodiments shown in fig. 2 and 3a-f.

Although exemplary embodiments of the present invention have been shown and described, it will be apparent to the person skilled in the art that a number of changes and modifications, or alterations of the invention as described herein may be made. Thus, it is to be understood that the above description of the invention and the accompanying drawing is to be regarded as a non-limiting example thereof and that the scope of the invention is defined in the appended patent claims.

## Claims

1. A valve arrangement for controlling a main flow of damping medium in a shock absorber from a first chamber (DC2 Pr) to a second chamber (DC1 Pc) during a first stroke and from the second chamber to the first chamber during a second stroke, the valve arrangement comprising:
a first actuator having a first actuator chamber (Vip2) communicating with said first chamber and said second chamber, said first actuator, during said first stroke, being arranged to actuate on said main flow of damping medium in response to a first actuating pressure in the first actuator chamber (Vip2);
a pilot valve (11) being arranged to control the first actuating pressure, the pilot valve having a pilot chamber (21) being in fluid communication with the first actuator chamber;
a first flow passage (6b; 106) for restricting a flow from the first actuator chamber to the pilot chamber; and
a first valve member (7b; 115) arranged between two oppositely arranged valve seats (13b, 14b; 113, 114), forming a first valve and a second valve that may only be open one at the time, **characterised in that**
the first valve member (7b; 115) is arranged to co-operate with said two oppositely arranged valve seats (13b, 14b; 113, 114) such that, during the first stroke, the second valve is closed and the first valve is open to allow a second flow passage between the first valve member and the first valve seat (13b; 113) in parallel with the first flow passage, and such that, during the second stroke, the first valve is closed and the second valve is open to allow a flow passage from the second chamber to the first actuator chamber.

2. The valve arrangement according claim 1, wherein the flow restriction area of the second flow passage is substantially larger than that of the first flow passage (6b; 106).

3. The valve arrangement according to any one of the preceding claims, wherein the first valve member (7b; 115) is further arranged such that the flow restriction area of the second flow passage varies with the pressure difference between the pilot chamber (21) and the first actuator chamber (Vip2).

4. The valve arrangement according to any one of the preceding claims, wherein the first valve member (7b; 115) is flexible.

5. The valve arrangement according to any one of the preceding claims, wherein the first valve member (7b; 115) is a shim or a plate-shaped element

6. The valve arrangement according to any one of the preceding claims, wherein the first and second valve seats (13b, 14b; 113, 114) are annular.

7. The valve arrangement according to any one of the preceding claims, wherein the first valve member (7b; 115) is in contact with both said first and second valve seats (13b, 14b; 113, 114) in a non-pressurized state.

8. The valve arrangement according to any one of the preceding claims, wherein the first flow passage (6b; 106) is at least one groove in the first valve seat (13b; 113).

9. The valve arrangement according to any one of the preceding claims, wherein the first flow passage (6b; 106) is a passage through a wall portion between the pilot chamber (21) and the first actuator chamber (Vip2).

10. The valve arrangement according to any one of the preceding claims, wherein the valve arrangement further comprises a compensation chamber (117) arranged oppositely to the first valve seat (13b; 113) for allowing a deflection of the first valve member (7b; 115) in order to extend the first actuator chamber (Vip2).

11. The valve arrangement according to any one of the preceding claims, wherein the valve arrangement further comprises a third flow passage (6a) for restricting a flow from the second actuator chamber (Vip1) to the pilot chamber (21) and a second valve member (7a) arranged between two oppositely arranged valve seats (13a, 14a) forming a third valve and a fourth valve that may only be open one at the time.

12. The valve arrangement according to claim 11, wherein the second valve member (7a) is arranged to co-operate with said two oppositely arranged valve seats (13a, 14a) such that, during the first stroke, the fourth valve is closed and the third valve is open to allow a fourth flow passage between the second valve member (7a) and the third valve seat in parallel with the third flow passage (6a), and such that, during the second stroke, the third valve is closed and the fourth valve is open to allow a flow passage from the second chamber (DC1Pc) to the second actuator chamber (Vip1).

13. The valve arrangement according to claim claim 12, wherein the flow restriction area of the fourth flow passage is substantially larger than that of the third flow passage (6a).

14. The valve arrangement according to any one of the claims 11 to 13, wherein the second valve member (7a) is further arranged such that the flow restriction area of the fourth flow passage varies with the pressure difference between the pilot chamber (21) and the second actuator chamber (Vip1).

15. The valve arrangement according to any one of the claims 11 to 14, wherein the second valve member (7a) is flexible.

16. The valve arrangement according to any one of the claims 11 to 15, wherein the second valve member (7a) is a shim or a plate-shaped element.

17. The valve arrangement according to any one of the claims 11 to 16, wherein the third and fourth valve seats (13a, 14a) are annular.

18. The valve arrangement according to any one of the claims 11 to 17, wherein the second valve member (7a) is in contact with both said third and fourth valve seats (13a, 14a) in a non-pressurized state.

19. The valve arrangement according to any one of the preceding claims, wherein the third flow passage (6a) is at least one groove in the third valve seat (13a).

20. The valve arrangement according to any one of the preceding claims, wherein the third flow passage (6a) is a passage through a wall portion between the pilot chamber (21) and the second actuator chamber (Vip1).

21. The valve arrangement according to any one of the preceding claims, wherein the valve arrangement further comprises an additional compensation chamber arranged oppositely to the third valve seat (13a) for allowing a deflection of the second valve member (7a) in order to extend the second actuator chamber (Vip1).

## Patentansprüche

1. Ventilanordnung zur Steuerung eines Hauptflusses von Dämpfungsmedium in einem Stoßdämpfer von einer ersten Kammer (DC2 Pr) zu einer zweiten Kammer (DC1 Pc) während eines ersten Hubs und von der zweiten Kammer zu der ersten Kammer während eines zweiten Hubs, die Ventilanordnung umfassend:
einen ersten Betätiger mit einer ersten Betätigerkammer (Vip2), die mit der ersten Kammer und der zweiten Kammer in Verbindung steht, wobei der erste Betätiger während des ersten Hubs angeordnet ist, in Reaktion auf einen ersten Betätigungsdruck in der ersten Betätigerkammer (Vip2) auf den Hauptfluss von Dämpfungsmittel zu wirken;
ein Pilotventil (11), das angeordnet ist, den ersten Betätigungsdruck zu steuern, wobei das Pilotventil eine Pilotkammer (21) aufweist, die mit der ersten Betätigerkammer in Fluidverbindung steht;
einen ersten Flussdurchgang (6b; 106) zum Begrenzen eines Flusses von der ersten Betätigerkammer zu der Pilotkammer; und
ein erstes Ventilelement (7b; 115), das zwischen zwei gegenüberliegend angeordneten Ventilsitzen (13b, 14b; 113, 114) angeordnet ist,
die ein erstes und ein zweites Ventil bilden, von denen jeweils nur eins geöffnet sein kann, **dadurch gekennzeichnet, dass**
das erste Ventilelement (7b; 115) angeordnet ist, mit den beiden gegenüberliegend angeordneten Ventilsitzen (13b, 14b; 113, 114) derart zusammenzuwirken, dass während des ersten Hubs das zweite Ventil geschlossen und das erste Ventil geöffnet ist, um einen zweiten Flussdurchgang zwischen dem ersten Ventilelement und dem ersten Ventilsitz (13b; 113) parallel zu dem ersten Flussdurchgang zu erlauben, und dass während des zweiten Hubs das erste Ventil geschlossen und das zweite Ventil geöffnet ist, um einen Flussdurchgang von der zweiten Kammer zu der ersten Betätigerkammer zu erlauben.

2. Ventilanordnung nach Anspruch 1, wobei der Flussbegrenzungsbereich des zweiten Flussdurchgangs im Wesentlichen größer als jener des ersten Flussdurchgangs (6b; 106) ist.

3. Ventilanordnung nach einem der vorhergehenden Ansprüche, wobei das erste Ventilelement (7b; 115) ferner derart angeordnet ist, dass der Flussbegrenzungsbereich des zweiten Flussdurchgangs mit dem Druckgefälle zwischen der Pilotkammer (21) und der ersten Betätigerkammer (Vip2) variiert.

4. Ventilanordnung nach einem der vorhergehenden Ansprüche, wobei das erste Ventilelement (7b; 115) flexibel ist.

5. Ventilanordnung nach einem der vorhergehenden Ansprüche, wobei das erste Ventilelement (7b; 115) ein scheiben- oder ein plattenförmiges Element ist

6. Ventilanordnung nach einem der vorhergehenden Ansprüche, wobei der erste und der zweite Ventilsitz (13b, 14b; 113, 114) ringförmig sind.

7. Ventilanordnung nach einem der vorhergehenden Ansprüche, wobei das erste Ventilelement (7b; 115) in einem nicht druckbeaufschlagten Zustand sowohl mit dem ersten als auch dem zweiten Ventilsitz (13b, 14b; 113, 114) in Kontakt steht.

8. Ventilanordnung nach einem der vorhergehenden Ansprüche, wobei der erste Flussdurchgang (6b; 106) mindestens eine Nut in dem ersten Ventilsitz (13b; 113) ist.

9. Ventilanordnung nach einem der vorhergehenden Ansprüche, wobei der erste Flussdurchgang (6b; 106) ein Durchgang durch einen Wandabschnitt zwischen der Pilotkammer (21) und der ersten Betätigerkammer (Vip2) ist.

10. Ventilanordnung nach einem der vorhergehenden Ansprüche, wobei die Ventilanordnung ferner eine Ausgleichskammer (117) umfasst, die dem ersten Ventilsitz (13b; 113) gegenüberliegend angeordnet ist, um eine Umlenkung des ersten Ventilelements (7b; 115) zu erlauben, um die erste Betätigerkammer (Vip2) zu erweitern.

11. Ventilanordnung nach einem der vorhergehenden Ansprüche, wobei die Ventilanordnung ferner einen dritten Flussdurchgang (6a) zur Einschränkung eines Flusses von der zweiten Betätigerkammer (Vip1) zu der Pilotkammer (21) und ein zweites Ventilelement (7a) umfasst, das zwischen zwei gegenüberliegend angeordneten Ventilsitzen (13a, 14a) angeordnet ist, die ein drittes Ventil und ein viertes Ventil bilden, von denen jeweils nur eins geöffnet sein kann.

12. Ventilanordnung nach Anspruch 11, wobei das zweite Ventilelement (7a) angeordnet ist, mit den beiden gegenüberliegend angeordneten Ventilsitzen (13a, 14a) derart zusammenzuwirken, dass während des ersten Hubs das vierte Ventil geschlossen und das dritte Ventil geöffnet ist, um einen vierten Flussdurchgang zwischen dem zweiten Ventilelement (7a) und dem dritten Ventilsitz parallel zu dem dritten Flussdurchgang (6a) zu erlauben, und dass während des zweiten Hubs das dritte Ventil geschlossen und das vierte Ventil geöffnet ist, um einen Flussdurchgang von der zweiten Kammer (DC1 Pc) zu der zweiten Betätigerkammer (Vip1) zu erlauben.

13. Ventilanordnung nach Anspruch 12, wobei der Flussbegrenzungsbereich des vierten Flussdurchgangs im Wesentlichen größer als jener des dritten Flussdurchgangs (6a) ist.

14. Ventilanordnung nach einem der Ansprüche 11 bis 13, wobei das zweite Ventilelement (7a) ferner derart angeordnet ist, dass der Flussbegrenzungsbereich des vierten Flussdurchgangs mit dem Druckgefälle zwischen der Pilotkammer (21) und der zweiten Betätigerkammer (Vip1) variiert.

15. Ventilanordnung nach einem der Ansprüche 11 bis 14, wobei das zweite Ventilelement (7a) flexibel ist.

16. Ventilanordnung nach einem der Ansprüche 11 bis 15, wobei das zweite Ventilelement (7a) ein scheiben- oder ein plattenförmiges Element ist.

17. Ventilanordnung nach einem der Ansprüche 11 bis 16, wobei der dritte und der vierte Ventilsitz (13a, 14a) ringförmig sind.

18. Ventilanordnung nach einem der Ansprüche 11 bis 17, wobei das zweite Ventilelement (7a) in einem nicht druckbeaufschlagten Zustand sowohl mit dem dritten als auch dem vierten Ventilsitz (13a, 14a) in Kontakt steht.

19. Ventilanordnung nach einem der vorhergehenden Ansprüche, wobei der dritte Flussdurchgang (6a) mindestens eine Nut in dem dritten Ventilsitz (13a) ist.

20. Ventilanordnung nach einem der vorhergehenden Ansprüche, wobei der dritte Flussdurchgang (6a) ein Durchgang durch einen Wandabschnitt zwischen der Pilotkammer (21) und der zweiten Betätigerkammer (Vip1) ist.

21. Ventilanordnung nach einem der vorhergehenden Ansprüche, wobei die Ventilanordnung ferner eine zusätzliche Ausgleichskammer umfasst, die dem dritten Ventilsitz (13a) gegenüberliegend angeordnet ist, um eine Umlenkung des zweiten Ventilelements (7a) zu erlauben, um die zweite Betätigerkammer (Vip1) zu erweitern.

## Revendications

1. Agencement de soupapes pour réguler un écoulement principal d'un fluide amortisseur dans un amortisseur d'une première chambre (DC2 Pr) vers une deuxième chambre (DC1 Pc) pendant une première course et de la deuxième chambre vers la première chambre pendant une deuxième course, l'agencement de soupapes comprenant :
un premier actionneur ayant une première chambre d'actionneur (Vip2) communiquant avec ladite première chambre et ladite deuxième chambre, ledit premier actionneur, pendant ladite première course, étant étudié pour agir sur ledit écoulement principal de fluide amortisseur en réponse à une première pression d'actionnement dans la première chambre d'actionneur (Vip2) ;
une soupape pilote (11) étant étudiée pour réguler la première pression d'actionnement, la soupape pilote ayant une chambre pilote (21) en communication fluidique avec la première chambre d'actionneur ;
un premier passage d'écoulement (6b ; 106) pour restreindre un écoulement de la première chambre d'actionneur vers la chambre pilote ; et
un premier élément de soupape (7b ; 115) disposé entre deux sièges de soupape (13b, 14b ; 113, 114) disposés en opposition formant une première soupape et une deuxième soupape pouvant seulement être ouvertes une à la fois,
**caractérisé en ce que** le premier élément de soupape (7b ; 115) est étudié pour coopérer avec lesdits deux sièges de soupape (13b, 14b ; 113, 114) disposés en opposition de sorte que pendant la première course, la deuxième soupape est fermée et la première soupape est ouverte pour permettre un deuxième passage d'écoulement entre le premier élément de soupape et le premier siège de soupape (13b ; 113) en parallèle avec le premier passage d'écoulement et de sorte que pendant la deuxième course, la première soupape est fermée et la deuxième soupape est ouverte pour permettre un passage d'écoulement de la deuxième chambre vers la première chambre d'actionneur.

2. Agencement de soupapes selon la revendication 1, dans lequel la zone de restriction d'écoulement du deuxième passage d'écoulement est sensiblement plus grande que celle du premier passage d'écoulement (6b ; 106).

3. Agencement de soupapes selon l'une quelconque des revendications précédentes, dans lequel le premier élément de soupape (7b ; 115) est en outre étudié de manière à ce que la zone de restriction d'écoulement du deuxième passage d'écoulement varie avec la différence de pression entre la chambre pilote (21) et la première chambre d'actionneur (Vip2).

4. Agencement de soupapes selon l'une quelconque des revendications précédentes, dans lequel le premier élément de soupape (7b ; 115) est flexible.

5. Agencement de soupapes selon l'une quelconque des revendications précédentes, dans lequel le premier élément de soupape (7b ; 115) est une cale ou un élément en forme de plaque.

6. Agencement de soupapes selon l'une quelconque des revendications précédentes, dans lequel les premier et deuxième sièges de soupape (13b, 14b ; 113, 114) sont annulaires.

7. Agencement de soupapes selon l'une quelconque des revendications précédentes, dans lequel le premier élément de soupape (7b ; 115) est en contact avec les deux dits premier et deuxième sièges de soupape (13b, 14b ; 113, 114) dans un état de non mise sous pression.

8. Agencement de soupapes selon l'une quelconque des revendications précédentes, dans lequel le premier passage d'écoulement (6b ; 106) est au moins une rainure dans le premier siège de soupape (13b ; 113).

9. Agencement de soupapes selon l'une quelconque des revendications précédentes, dans lequel le premier passage d'écoulement (6b ; 106) est un passage à travers une partie de paroi entre la chambre pilote (21) et la première chambre d'actionneur (Vip2).

10. Agencement de soupapes selon l'une quelconque des revendications précédentes, dans lequel l'agencement de soupapes comprend en outre une chambre de compensation (117) disposée de manière opposée au premier siège de soupape (13b ; 113) pour permettre une déflexion du premier élément de soupape (7b ; 115) afin d'étendre la première chambre d'actionneur (Vip2).

11. Agencement de soupapes selon l'une quelconque des revendications précédentes, dans lequel l'agencement de soupapes comprend en outre un troisième passage d'écoulement (6a) pour restreindre un écoulement de la deuxième chambre d'actionneur (Vip1) vers la chambre pilote (21) et un deuxième élément de soupape (7a) disposé entre deux sièges de soupape (13a, 14a) disposés en opposition formant une troisième soupape et une quatrième soupape pouvant seulement s'ouvrir une à la fois.

12. Agencement de soupapes selon la revendication 11, dans lequel le deuxième élément de soupape (7a) est étudié pour coopérer avec lesdits deux sièges de soupape (13a, 14a) disposés en opposition de sorte que pendant la première course, la quatrième soupape est fermée et la troisième soupape est ouverte pour permettre un quatrième passage d'écoulement entre le deuxième élément de soupape (7a) et le troisième siège de soupape en parallèle avec le troisième passage d'écoulement (6a) et de sorte que, pendant la deuxième course, la troisième soupape est fermée et la quatrième soupape est ouverte pour permettre un passage d'écoulement de la deuxième chambre (DC1 Pc) vers la deuxième chambre d'actionneur (Vip1).

13. Agencement de soupapes selon la revendication 12, dans lequel la zone de restriction d'écoulement du quatrième passage d'écoulement est sensiblement plus grande que celle du troisième passage d'écoulement (6a).

14. Agencement de soupapes selon l'une quelconque des revendications 11 à 13, dans lequel le deuxième élément de soupape (7a) est en outre étudié de manière à ce que la zone de restriction d'écoulement du quatrième passage d'écoulement varie avec la différence de pression entre la chambre pilote (21) et la deuxième chambre d'actionneur (Vip1).

15. Agencement de soupapes selon l'une quelconque des revendications 11 à 14, dans lequel le deuxième élément de soupape (7a) est flexible.

16. Agencement de soupapes selon l'une quelconque des revendications 11 à 15, dans lequel le deuxième élément de soupape (7a) est une cale ou un élément semblable à une plaque.

17. Agencement de soupapes selon l'une quelconque des revendications 11 à 16, dans lequel les troisième et quatrième sièges de soupape (13a, 14a) sont annulaires.

18. Agencement de soupapes selon l'une quelconque des revendications 11 à 17, dans lequel le deuxième élément de soupape (7a) est en contact avec les deux dits troisième et quatrième sièges de soupape (13a, 14a) dans un état de non mise sous pression.

19. Agencement de soupapes selon l'une quelconque des revendications précédentes, dans lequel le troisième passage d'écoulement (6a) est au moins une rainure dans le troisième siège de soupape (13a).

20. Agencement de soupapes selon l'une quelconque des revendications précédentes, dans lequel le troisième passage d'écoulement (6a) est un passage à travers une partie de paroi entre la chambre pilote (21) et la deuxième chambre d'actionneur (Vip1).

21. Agencement de soupapes selon l'une quelconque des revendications précédentes, dans lequel l'agencement de soupapes comprend en outre une chambre de compensation additionnelle disposée en opposition au troisième siège de soupape (13a) pour permettre une déflexion du deuxième élément de soupape (7a) afin d'étendre la deuxième chambre d'actionneur (Vip1).
